# EUROPEAN PATENT APPLICATION

(11) **EP 4 755 844 A1**
(43) Date of publication of application: **10.06.2026**
(21) Application number: 24849050.0
(22) Date of filing: 25.07.2024
(51) Int. Cl.: C01B 3/04, B01J 23/78, B01J 27/24

(54) **METHOD FOR PRODUCING HYDROGEN**

(30) Priority: 31.07.2023 JP 2023123960
(71) Applicant: Japan Science and Technology Agency, Kawaguchi-shi, Saitama 332-0012 (JP)
(72) Inventor: KITANO Masaaki, Tokyo 152-8550 (JP); HOSONO Hideo, Tokyo 152-8550 (JP); MIYAZAKI Masayoshi, Tokyo 152-8550 (JP); YOKOYAMA Toshiharu, Tokyo 152-8550 (JP); MIYASHITA Kazuki, Tokyo 152-8550 (JP)
(74) Representative: Dolphin, Kirsty Mairi
(86) International application number: PCT/JP2024/026635
(87) International publication number: WO 2025/028396

(57) **Abstract**

Provided is a method for producing hydrogen in which ammonia can be decomposed at high efficiency even with low power consumption to produce hydrogen. The method for producing hydrogen of the present invention includes a step in which an ammonia decomposition catalyst including a titanate represented by the following general formula (1) or a titanium oxynitride represented by the following general formula (2) is brought into contact with ammonia under irradiation with microwaves at low output.

ATiO₃₋ₓ (1)

(In the general formula (1), A represents at least one element selected from the group consisting of Ba and Sr, and x is a value represented by 0.1 ≤ x ≤ 2.0.)

ATiO₃₋ₓN_{y} (2)

(In the general formula (2), A represents at least one element selected from the group consisting of Ba and Sr, x is a value represented by 0.1 ≤ x ≤ 2.0, and y is a value represented by 0.1 ≤ y ≤ 1.0.)

## Description

### TECHNICAL FIELD

The present invention relates to a method for producing hydrogen in which a specific ammonia decomposition catalyst is used in combination with irradiation with microwaves at low output.

This application claims priority based on Japanese Patent Application No. 2023-123960 filed in Japan on July 31, 2023, the contents of which are incorporated herein by reference.

### BACKGROUND ART

Ammonia decomposition is an endothermic reaction, and the higher the temperature, the more thermodynamically favorable the reaction becomes on the product side. From Le Chatelier's principle, lower pressure is also more favorable to the product side. In this respect, ammonia decomposition is significantly different from ammonia synthesis, which is an exothermic reaction; in ammonia synthesis, lower temperature is thermodynamically more favorable to ammonia formation, and higher pressure is more favorable to the product side. In addition, in ammonia synthesis, the dissociation of N₂ molecules is generally the rate-determining step. In contrast, in ammonia decomposition, cleavage of the N-H bond proceeds relatively easily, and it is generally consedered that the process in which atomic nitrogen species on a metal surface associate and desorb as N₂ molecules is the rate-determining step.

In the ammonia decomposition reaction, in catalysts in which Ni is typically supported on an oxide, carbon, or the like, for example, in many cases, only at high temperatures of 600 °C or higher does the ammonia conversion exceed 90%, and compared with Ru-based catalysts, the reaction temperature region used is higher by about 100 °C to 200 °C (for example, Patent Document 1).

On the other hand, because there are limits to the ammonia decomposition activity of the catalyst itself, technologies that are expected to offer advantages such as reduced CO₂ emissions during chemical reactions, high efficiency, and low cost have attracted attention in recent years. Examples include a "plasma membrane reactor" in which ammonia is decomposed using atmospheric-pressure plasma by the energy of electrons in the plasma (specifically, application of a voltage of 30,000 volts) (Patent Documents 2 and 3), and a technique for decomposing ammonia using a Cu-Fe-based photocatalyst and LED irradiation (specifically, power consumption of 180 W) (Non-Patent Document 1).

### Citation List

### Patent Document

Patent Document 1: Japanese Unexamined Patent Application Publication No. 2019-167265
Patent Document 2: Japanese Unexamined Patent Application Publication No. 2022-168935
Patent Document 3: Japanese Unexamined Patent Application Publication No. 2022-108381

### Non-Patent Document

Non-Patent Document 1: Science, 2022, Vol. 378, pp. 889-893.

### SUMMARY OF INVENTION

### Technical Problem

Metal-supported catalysts such as those described in Patent Document 1 typically use carbonaceous supports such as activated carbon or inorganic oxide supports. However, these metal-supported catalysts, particularly when the supported metal species is a non-Ru metal, exhibit low reaction activity and have only insufficient performance for practical use. On the other hand, there is a need for a method that can decompose ammonia with even lower power consumption than the methods of Patent Document 1 and Non-Patent Document 1.

### Solution to Problem

The present inventors have found that by bringing an ammonia decomposition catalyst containing a specific titanate or a specific titanium oxynitride into contact with ammonia under irradiation with microwaves at low output, ammonia can be decomposed with low power consumption to produce hydrogen, thereby arriving at the present invention.

That is, the gist of the present invention is as follows.
[1] A method for producing hydrogen comprising a step of bringing an ammonia decomposition catalyst containing a titanate represented by the following general formula (1) or a titanium oxynitride represented by the following general formula (2) into contact with ammonia under irradiation with microwaves at low output.

   ATiO₃₋ₓ (1)

   (In the general formula (1), A represents at least one element selected from the group consisting of Ba and Sr, and x is a value represented by 0.1 ≤ x ≤ 2.0.)

   ATiO₃₋ₓN_{y} (2)

   (In the general formula (2), A represents at least one element selected from the group consisting of Ba and Sr, x is a value represented by 0.1 ≤ x ≤ 2.0, and y is a value represented by 0.1 ≤ y ≤ 1.0.)
[2] The method for producing hydrogen according to [1], wherein the output of the microwave irradiation is in a range of 3 W or more and 1000 W or less.
[3] The method for producing hydrogen according to [2], wherein the output of the microwave irradiation is in a range of 10 W or more and 50 W or less.
[4] The method for producing hydrogen according to any one of [1] to [3], wherein the step of bringing the ammonia decomposition catalyst into contact with the ammonia is a step of causing catalytic cracking by continuously supplying an ammonia gas having a volume fraction in a range of 0.1% or more and 100% or less to a catalyst layer containing the ammonia decomposition catalyst at a reaction pressure of 0.01 MPa or more and 1.0 MPa or less, and under irradiation with microwaves at low output, at a weight hourly space velocity (WHSV) of 15000 mL g⁻¹h⁻¹ or more (preferably, for example, 50000 mL g⁻¹h⁻¹ or less). [5] The method for producing hydrogen according to any one of [1] to [4], wherein the titanate represented by the general formula (1) or the titanium oxynitride represented by the general formula (2) has a hexagonal crystal structure.
[6] The method for producing hydrogen according to any one of [1] to [5], wherein, in the general formulas (1) and (2), A is Ba.
[7] The method for producing hydrogen according to any one of [1] to [6], wherein the ammonia decomposition catalyst contains a metal-supported material in which a transition metal is supported on a support, and the support is the titanate represented by the general formula (1) or the titanium oxynitride represented by the general formula (2).
[8] The method for producing hydrogen according to [7], wherein the transition metal is at least one selected from the group consisting of Ru, Ni, Fe, and Co.
[9] The method for producing hydrogen according to any one of [1] to [8], further comprising a step of collecting hydrogen produced in the step of bringing the ammonia into contact.

### Effects of the Invention

In the method for producing hydrogen of the present invention, by using in combination a specific ammonia decomposition catalyst and irradiation with microwaves at low output, ammonia can be decomposed with low power consumption to produce hydrogen.

### BRIEF DESCRIPTION OF DRAWINGS

Fig. 1 is a conceptual diagram illustrating an example of the method for producing hydrogen according to the present embodiment.
Fig. 2 is a graph showing the dependence of ammonia decomposition efficiency on microwave output in Example 1.
Fig. 3 is a graph showing the dependence of ammonia decomposition efficiency on microwave output in Example 2.
Fig. 4 is a graph showing the dependence of ammonia decomposition efficiency on microwave output in Example 3.
Fig. 5 is a graph showing the dependence of ammonia decomposition efficiency on microwave output in Comparative Example 1.
Fig. 6 is a graph showing the dependence of ammonia decomposition efficiency on microwave output in Comparative Example 2.
Fig. 7 is a graph showing the dependence of ammonia decomposition efficiency on microwave output in Comparative Example 3.
Fig. 8 is a graph showing the dependence of ammonia decomposition efficiency on microwave output in Comparative Example 4.

### DESCRIPTION OF EMBODIMENTS

A method for producing hydrogen according to one embodiment (the present embodiment) of the present invention will be described below.

### (Method for Producing Hydrogen)

The method for producing hydrogen of the present embodiment includes a step of bringing an ammonia decomposition catalyst containing a titanate represented by the following general formula (1) or a titanium oxynitride represented by the following general formula (2) into contact with ammonia under irradiation with microwaves at low output.

ATiO₃₋ₓ (1)

(In the general formula (1), A represents at least one element selected from the group consisting of Ba and Sr, and x is a value represented by 0.1 ≤ x ≤ 2.0.)

ATiO₃₋ₓN_{y} (2)

(In the general formula (2), A represents at least one element selected from the group consisting of Ba and Sr, x is a value represented by 0.1 ≤ x ≤ 2.0, and y is a value represented by 0.1 ≤ y ≤ 1.0.)

It is preferable that the method for producing hydrogen of the present embodiment further includes a step of collecting hydrogen produced in the step of bringing the ammonia into contact. In the method for producing hydrogen of the present embodiment, hydrogen and nitrogen are produced by decomposing ammonia by bringing ammonia into contact with the catalyst under irradiation with microwaves at low output, using the ammonia decomposition catalyst of the present embodiment as a catalyst. This reaction is represented by the following formula (A).

2NH₃→3H₂+N₂ (A)

As a specific production method, any method may be used as long as hydrogen is produced by decomposing ammonia by bringing ammonia into contact with the catalyst under irradiation with microwaves at low output, and production can be carried out according to any suitable known production method without particular limitation.

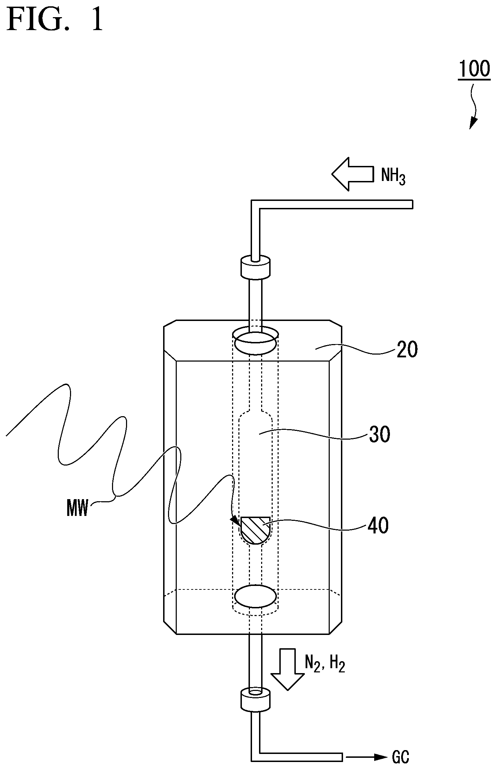

Fig. 1 is a conceptual diagram illustrating an example of the method for producing hydrogen according to the present embodiment (that is, an ammonia decomposition reaction apparatus 100 provided with a microwave resonator 20 serving as a microwave irradiation device). The method for producing hydrogen of the present invention is not limited to the conceptual diagram shown in Fig. 1. An ammonia decomposition catalyst 40 according to the present embodiment is packed into a reaction tube 30, and low-output microwaves (MW) are irradiated onto the ammonia decomposition catalyst 40 while the ammonia decomposition catalyst 40 is brought into contact with an ammonia gas, thereby decomposing ammonia to generate hydrogen. Then, by collecting the generated hydrogen, hydrogen can be obtained.

In the method for producing hydrogen of the present embodiment, when the hydrogen produced by bringing the catalyst into contact with ammonia is collected, hydrogen may be collected in a state in which nitrogen coexists. Hydrogen may also be collected in a hydrogen-super-rich state or in a state substantially consisting of hydrogen alone using a known method. In addition, in order to separate the produced hydrogen and nitrogen and collect hydrogen, a higher volume fraction of ammonia is preferable, and the volume fraction is preferably 5% or more, more preferably 20% or more, and still more preferably 70% or more.

In the method for producing hydrogen of the present embodiment, as the irradiation with microwaves at low output, it is preferable that the output is in a range of 3 W or more and 1000 W or less, and more preferable that the output is in a range of 10 W or more and 50 W or less.

In the method for producing hydrogen of the present embodiment, the wavelength region of the microwaves used for irradiation at low output is not particularly limited, and may be a wavelength region used in known microwave irradiation devices. Examples include 915 MHz and 2450 MHz.

The irradiation with microwaves at low output can be carried out using, for example, a known microwave irradiation device. A specific example of a microwave irradiation device includes a microwave reaction device MR-2G-100 manufactured by Ryowa Electronics Co., Ltd., which is used in the Examples described later.

The reaction pressure in the method for producing hydrogen of the present invention is not particularly limited, but is usually 0.01 MPa or more, preferably 0.05 MPa or more, and usually 1.0 MPa or less, preferably 0.5 MPa or less, and more preferably 0.1 MPa or less.

Because the ammonia decomposition reaction is an equilibrium reaction and involves an increase in volume, lower pressure conditions are more favorable. However, in order to obtain a sufficient ammonia decomposition reaction rate, it is preferable to carry out the reaction within the above pressure range. In addition, considering equipment aspects, it is advantageous to carry out the reaction at 0.1 MPa.

The ammonia used in the method for producing hydrogen of the present invention is not particularly limited and may be ammonia alone or ammonia diluted with a balance gas. That is, an ammonia gas having a volume fraction of 1 ppm to 100% can be used. In the method for producing hydrogen of the present invention, it is preferable that the method further includes a step of collecting hydrogen produced in the step of bringing the ammonia into contact. For example, the step of collecting hydrogen may include a step of separating the produced hydrogen and nitrogen.

In the step of bringing the ammonia into contact, the reaction activity of the ammonia decomposition catalyst used is not particularly limited. For example, as the weight hourly space velocity (WHSV) of the ammonia gas brought into contact with the ammonia decomposition catalyst, an appropriate value can be selected as appropriate according to the ammonia decomposition catalyst, from the viewpoint of production efficiency. The above WHSV can be increased, and thereby the hydrogen production rate suitable for practical production conditions can be increased.

Taking a hydrogen production rate as an example, in a reaction condition in which an ammonia decomposition catalyst Ni/BaTiO₃₋ₓN_{y} is used, under irradiation with microwaves at low output (for example, 3 W to 1000 W, preferably 10 W to 50 W) at a reaction pressure of 0.1 MPa, when the WHSV is 150000 mL g⁻¹h⁻¹, the hydrogen production rate is preferably 300 mmol/g·h or more, more preferably 500 mmol/g·h or more, still more preferably 800 mmol/g·h or more, and most preferably 900 mmol/g·h or more. A hydrogen production rate of 500 mmol/g·h or more is suitable as a practical production condition. A hydrogen production rate of 800 mmol/g·h or more is suitable as a high-efficiency production condition. A hydrogen production rate of 900 mmol/g·h or more is suitable as a further high-efficiency production condition.

Accordingly, it is possible to select an appropriate combination of the ammonia decomposition catalyst used and the WHSV of the ammonia gas brought into contact with the ammonia decomposition catalyst so that such a hydrogen production rate is obtained. In addition, the WHSV is not particularly limited as long as it is within a range in which important catalyst characteristic values, namely the turnover frequency (TOF) and turnover number (TON), do not exceed their maximum values. Specific examples of the WHSV include ranges of 10000 mL g⁻¹h⁻¹ or more, 15000 mL g⁻¹h⁻¹ or more, 20000 mL g⁻¹h⁻¹ or more, 30000 mL g⁻¹h⁻¹ or more, and 50000 mL g⁻¹h⁻¹ or more.

The step of catalytic cracking in the method for producing hydrogen of the present embodiment, that is, the step of causing catalytic cracking at the above WHSV under irradiation with microwaves at low output while continuously supplying an ammonia gas to a catalyst layer containing the ammonia decomposition catalyst of the present embodiment, is more preferably carried out under the following reaction conditions.
(1) The volume fraction of the continuously supplied ammonia gas is in a range of 0.1% or more and 100% or less.
(2) The reaction pressure of the ammonia gas in the catalytic cracking is in a range of 0.01 MPa or more and 1.0 MPa or less.
(3) The reaction temperature of the ammonia gas in the catalytic cracking is in a range of 300 °C or more and 800 °C or less.

In the method for producing hydrogen of the present invention, it is preferable, from the viewpoint of increasing conversion, that before bringing ammonia into contact with the catalyst, the catalyst be exposed to an atmosphere of a reducing gas such as hydrogen to activate the transition metal as the catalytic active component. The temperature during the exposure is not particularly limited but is usually 300 °C or more and 700 °C or less. The exposure time is not particularly limited but is usually 30 minutes or more and 2 hours or less. Microwave irradiation may also be used. In that case, for example, the irradiation power may be in a range of 3 W or more and 1000 W or less, or in a range of 10 W or more and 50 W or less. The irradiation time may be 1 to 5 minutes or 2 to 4 minutes.

In the method for producing hydrogen of the present invention, the type of the reaction vessel is not particularly limited, and any reaction vessel that can usually be used for ammonia decomposition reactions can be used. Specific examples of reaction types include a batch reaction type, a closed circulation system reaction type, and a flow reaction type. Among these, from a practical standpoint, for example, a flow reaction type as in the example shown in Fig. 1 is preferable.

The material of the reaction vessel is not particularly limited and may be any known material for ammonia decomposition reaction vessels as long as the ammonia decomposition catalyst can be irradiated with microwaves. For example, a usual gas-solid contact reaction apparatus using a corrosion-resistant material that does not absorb microwaves, such as fused silica, can be used.

In the present invention, as in conventional methods, the ammonia decomposition reaction can be carried out using single reactor or multiple reactors filled with a catalyst. Either a method in which multiple reactors are connected or a method in which a reactor having multiple reaction layers in the same reactor is used can be used.

### [Ammonia Decomposition Catalyst]

The ammonia decomposition catalyst used in the method for producing hydrogen of the present embodiment contains a titanate represented by the above general formula (1) or a titanium oxynitride represented by the above general formula (2).

ATiO₃₋ₓ (1)

(In the general formula (1), A represents at least one element selected from the group consisting of Ba and Sr, and x is a value represented by 0.1 ≤ x ≤ 2.0.)

ATiO₃₋ₓN_{y} (2)

(In the general formula (2), A represents at least one element selected from the group consisting of Ba and Sr, x is a value represented by 0.1 ≤ x ≤ 2.0, and y is a value represented by 0.1 ≤ y ≤ 1.0.)

Further, the ammonia decomposition catalyst used in the method for producing hydrogen of the present embodiment may contain a material in which a transition metal is supported on a support. The support is the titanate represented by the above general formula (1) or the titanium oxynitride represented by the above general formula (2).

### [Titanate]

The titanate of the present embodiment is a composite oxide represented by the above general formula (1).

In the general formula (1), A represents at least one element selected from the group consisting of Ba and Sr, and x is a value represented by 0.1 ≤ x ≤ 2.0. It is preferable that A is Ba. It is preferable that x is a value represented by 0.1 ≤ x ≤ 1.5, and more preferable that x is a value represented by 0.1 ≤ x ≤ 1.0.

The titanate represented by the above general formula (1) preferably has a hexagonal crystal structure.

### [Titanium Oxynitride]

The titanium oxynitride of the present embodiment is a titanium oxynitride represented by the above general formula (2).

In the general formula (2), A represents at least one element selected from the group consisting of Ba and Sr, x is a value represented by 0.1 ≤ x ≤ 2.0, and y is a value represented by 0.1 ≤ y ≤ 1.0. It is preferable that A is Ba. It is preferable that x is a value represented by 0.1 ≤ x ≤ 1.5, and more preferable that x is a value represented by 0.1 ≤ x ≤ 1.0. It is preferable that y is a value represented by 0.1 ≤ y ≤ 1.0, and more preferable that y is a value represented by 0.1 ≤ y ≤ 0.4.

The titanium oxynitride represented by the above general formula (2) preferably has a hexagonal crystal structure.

The titanium oxynitride of the present embodiment is an oxynitride obtained by doping nitrogen ions into oxygen sites of the composite oxide represented by the above general formula (1). The titanium oxynitride of the present invention is a compound represented by the above general formula (2).

The amount of nitrogen doped into the titanium oxynitride of the present invention is not particularly limited. It is preferable that the crystal structure of the composite oxide represented by the general formula (1) (for example, a hexagonal crystal structure) be maintained.

The relationship between x and y is preferably such that the titanium oxynitride is electrically neutral, for example, 2x - 3y = 0.

When 2x - 3y is not zero, there are cases where the overall charge balance is maintained neutral by a change in the charge of Ti. For example, although Ti is usually Ti⁴⁺, an overall charge balance can be achieved by coexistence of Ti⁴⁺ and Ti³⁺.

The nitrogen doped into the titanium oxynitride of the present invention may be partially substituted by atoms other than nitrogen as long as the effects of the present invention are not impaired. Specifically, it may contain, for example, electrons, hydrogen, carbon, halogen atoms, and the like.

Specific examples of the titanium oxynitride of the present invention include, for example, oxynitrides represented by the general formula (2) in which A is Ba, and oxynitrides in which A is Sr.

Examples of the titanium oxynitride represented by the general formula (2) in which A is Ba include BaTiO₃₋ₓN_{y.}

### <Method for Producing Titanium oxynitride>

A method for producing the titanium oxynitride represented by the above general formula (2) according to the present invention includes, for example, a step of heating an oxyhydride represented by the following general formula (3) under a nitrogen or ammonia atmosphere.

ATiO₃₋ₓH_{z} (3)

(In the general formula (3), A represents at least one element selected from the group consisting of Ba and Sr, x is a value represented by 0.1 ≤ x ≤ 2.0, and z is a value represented by 0.1 ≤ z ≤ 2.0.)

In the heating step, the heating temperature is preferably in a range of 300 °C or more and 900 °C or less, and more preferably in a range of 400 °C or more and 700 °C or less. The pressure of the nitrogen atmosphere is preferably in a range of 0.01 MPa or more and 3.0 MPa or less, and more preferably in a range of 0.1 MPa or more and 1.0 MPa or less.

An example of the compound represented by the above general formula (3) which is a raw material in the production method of the present invention includes BaTiO₃₋ₓH_{z}.

The oxyhydride represented by the above general formula (3), which is a raw material in the production method of the present invention, can be produced by a known method. For example, production can include a step of heating TiO₂ and a compound represented by the following general formula (4).

AH₂ (4)

In the general formula (4), A represents at least one element selected from the group consisting of Ba and Sr.

An example of the compound represented by the above general formula (4) includes BaH₂.

A detailed production method will be described in the respective embodiments described later. For example, the method may include a step of producing an oxyhydride corresponding to the desired titanium oxynitride, and a step of heating the obtained oxyhydride in a nitrogen atmosphere.

Examples of processing conditions in the heating step include heating at 300 °C or more and 900 °C or less in a nitrogen gas flow for 1 to 50 hours, preferably at 400 °C or more and 800 °C or less for 2 to 30 hours, and more preferably at 500 °C or more and 700 °C or less for 5 to 20 hours.

### <Quantitative Determination of Nitrogen Contained in Titanium Oxynitride>

The amount of nitrogen in BaTiO₃₋ₓN_{y}, which is a titanium oxynitride produced as described above, can be determined by analyzing the sample with a CHN elemental analyzer.

### [Transition Metal]

The transition metal used in the present embodiment is not particularly limited but is preferably at least one selected from transition metal elements of Groups 8, 9, and 10 of the periodic table.

Specific metal elements are not particularly limited but are usually Cr, Mo, Mn, Re, Fe, Ru, Os, Co, Rh, Ni, Pd, and Pt. From the standpoint of having a high bond energy with nitrogen, Mo, Re, Fe, Ru, Os, Co, and Ni are preferable. More preferably, Ru, Co, Fe, or Ni is used. From the standpoint of having high reaction activity, Ru is preferable. In cases where economic factors are also emphasized, for example, Ni, Co, or Fe is preferable.

Each of the above elements may be used alone or in combination of two or more. Intermetallic compounds of these elements, such as Co₃Mo₃N, Fe₃Mo₃N, Ni₂Mo₃N, and Mo₂N, may also be used. Preferably, each element is used alone or in combination of two or more, and more preferably, it is advantageous in terms of ease of operation and cost in production to use an element alone.

The loading amount of the transition metal supported is not particularly limited, but is usually 0.01 parts by mass (0.01 % by mass) or more, preferably 0.5 parts by mass (0.5 % by mass) or more, more preferably 1 part by mass (1 % by mass) or more, and still more preferably 2 parts by mass (2 % by mass) or more, per 100 parts by mass of the support. The loading amount is usually 50 parts by mass (50 % by mass) or less, preferably 40 parts by mass (40 % by mass) or less, more preferably 30 parts by mass (30 % by mass) or less, and still more preferably 20 parts by mass (20 % by mass) or less. When the lower limit is at least the above value, the effects of the present invention can be advantageously obtained, and when the upper limit is at most the above value, the effects of the present invention, balancing the loading amount and cost, can be expected in light of.

### <Method for Loading Transition Metal on Titanate or Titanium oxynitride>

The method for loading a transition metal on a titanate or titanium oxynitride is not particularly limited. For example, a supported material (hereinafter sometimes referred to as M/ ATiO₃₋ₓ or M/ATiO₃₋ₓN_{y}) in which a metal is fixed to a titanate (ATiO₃₋ₓ) represented by the above general formula (1) or a titanium oxynitride (ATiO₃₋ₓN_{y}) represented by the above general formula (2) can be obtained by the following steps (I) and (II).
(I) A step of mixing a powder of the titanate (ATiO₃₋ₓ) represented by the above general formula (1) or the titanium oxynitride (ATiO₃₋ₓN_{y}) represented by the above general formula (2), obtained by the above method, with a compound of the metal to be supported.
(II) A step of heating the mixture obtained in the step (I) at 250 °C for 0.5 to 4 hours under an atmosphere of a gas containing hydrogen, and thermally decomposing the metal compound.

For example, by using a titanium oxynitride (ATiO₃₋ₓN_{y}) and transition metal compounds such as Ru₃(CO)₁₂, Co₂(CO)₈, Fe₂(CO)₉, and Ni(C₅H₅)₂, which are compounds of transition metals such as Ru, Co, Fe, and Ni supported on the support, metal-supported materials such as Ru-supported ATiO₃₋ₓN_{y} (abbreviated as Ru/ATiO₃₋ₓN_{y}), Co-supported ATiO₃₋ₓN_{y} (abbreviated as Co/ATiO₃₋ₓN_{y}), Fe-supported ATiO₃₋ₓN_{y} (abbreviated as Fe/ ATiO₃₋ₓN_{y}), and Ni-supported ATiO₃₋ₓN_{y} (abbreviated as Ni/ ATiO₃₋ₓN_{y}) can be synthesized.

The transition metal in the present embodiment is preferably in the form of transition metal particles. The transition metal is more preferably in the form of transition metal nanoparticles having a particle diameter of 100 nm or less.

The shape of the ammonia decomposition catalyst of the present embodiment is not particularly limited, and may be any forms such as a bulk form, a powder form, or a film form. The particle diameter of the powder-form metal-supported material is not particularly limited but is usually 1 nm or more and 10 µm or less.

The particle diameter of the transition metal in the ammonia decomposition catalyst of the present embodiment is not particularly limited but is usually 1 nm or more and 100 nm or less. From the standpoint of providing many step sites that serve as active sites for nitrogen dissociation when used as an ammonia decomposition catalyst, a diameter of 20 nm or less is preferable, and more preferably 10 nm or less.

### <Production Method for Producing Ammonia Decomposition Catalyst>

When the ammonia decomposition catalyst of the present invention is a catalyst in which a transition metal is supported on a support composed of titanate (ATiO₃₋ₓ) or titanium oxynitride (ATiO₃₋ₓN_{y}), the ammonia decomposition catalyst of the present embodiment is produced by loading the transition metal on the support containing the titanate or titanium oxynitride. The production method is not particularly limited, but usually, the catalyst is produced by loading a transition metal or a compound serving as a precursor of a transition metal (hereinafter referred to as a transition metal compound) on the support.

The composition of the titanate or titanium oxynitride serving as a raw material for the ammonia decomposition catalyst of the present embodiment may be that obtained using commercially available reagents or industrial raw materials, or that obtained from corresponding metals by a known method.

The method of loading a transition metal on the support used in the present embodiment is not particularly limited and a known method can be used. Usually, a method is employed in which a transition metal compound that is a compound of a transition metal and can be converted into a transition metal by reduction or thermal decomposition is supported on the support and then converted into a transition metal.

The transition metal compound is not particularly limited, and an inorganic compound or organometallic complex of a transition metal, which is easily thermally decomposed, can be used. Specific examples include complexes of transition metals, oxides of transition metals, nitrates, chlorides, and other transition metal salts.

Examples of Ru compounds include triruthenium dodecacarbonyl [Ru₃(CO)₁₂], dichlorotetrakis(triphenylphosphine)ruthenium(II) [RuCl₂(PPh₃)₄], dichlorotris(triphenylphosphine)ruthenium(II) [RuCl₂(PPh₃)₃], tris(acetylacetonato)ruthenium(III) [Ru(acac)₃], ruthenocene Ru(C₅H₅)], nitrosyl nitrate ruthenium [Ru(NO)(NO₃)₃], potassium ruthenate, ruthenium oxide, ruthenium nitrate, and ruthenium chloride. Tris(acetylacetonato)ruthenium(III) [Ru(acac)₃] is preferable.

Examples of Fe compounds include iron pentacarbonyl [Fe(CO)₅], triiron dodecacarbonyl [Fe₃(CO)₁₂], diiron nonacarbonyl [Fe₂(CO)₉], iron tetracarbonyl iodide [Fe(CO)₄I₂], tris(acetylacetonato)iron(III) [Fe(acac)₃], ferrocene [Fe(C₅H₅)₂], iron oxide, iron nitrate, and iron chloride (FeCl₃).

Examples of Co compounds include dicobalt octacarbonyl [Co₂(CO)₈], tris(acetylacetonato)cobalt(III) [Co(acac)₃], cobalt(II) acetylacetonate [Co(acac)₂], cobaltocene [Co(C₅H₅)₂], cobalt oxide, cobalt nitrate, and cobalt chloride.

Examples of Ni compounds include nickel acetate [Ni(OCOCH₃)₂], nickel acetylacetonate [Ni(acac)₂], nickel chloride [NiCl₂], nickelocene [Ni(C₅H₅)₂], and nickel nitrate.

Among these transition metal compounds, when transition metal carbonyl complexes such as [Ru₃(CO)₁₂], [Fe(CO)₅], [Fe₃(CO)₁₂], [Fe₂(CO)₉], [Co₂(CO)₈], and [Ni(C₅H₅)₂] are used, a transition metal is supported by heating after loading the complex on the support. Therefore, in producing the ammonia decomposition catalyst of the present embodiment, the reduction treatment described later can be omitted, and thus these transition metal carbonyl complexes are preferable.

When transition-metal nitrates such as iron nitrate, cobalt nitrate, and nickel nitrate are used, a transition metal is supported by heating after loading the nitrate by impregnation in an aqueous solution. Therefore, as a production method of the ammonia decomposition catalyst of the present embodiment, this is preferable because it is simple and leads to cost reduction.

The amount of the transition metal compound used is not particularly limited, and an amount sufficient to achieve a desired loading amount can be appropriately used. The amount is usually 0.01 parts by mass (0.01 % by mass) or more, preferably 2 parts by mass (2 % by mass) or more, more preferably 10 parts by mass (10 % by mass) or more, and particularly preferably 20 parts by mass (20 % by mass) or more, per 100 parts by mass of the support. The amount is usually 50 parts by mass (50 % by mass) or less, preferably 40 parts by mass (40 % by mass) or less, and more preferably 30 parts by mass (30 % by mass) or less.

Specific examples of methods for loading the transition metal compound on the support include impregnation, physical mixing, CVD (chemical vapor deposition), and sputtering.

In the physical mixing method, the support and the transition metal compound are mixed in the solid state and then heated under an atmosphere containing hydrogen (such as a gas-filled atmosphere or a gas flow) or under vacuum. The heating temperature is not particularly limited but is usually 200 °C or more and 600 °C or less. The heating time is not particularly limited but is preferably 2 hours or more.

When a transition metal compound that is converted into a transition metal by thermal decomposition is used, a transition metal is usually supported on the support at this stage by thermal decomposition, thereby providing the ammonia decomposition catalyst of the present embodiment.

When a transition metal compound that is not converted into a transition metal by thermal decomposition is used, the ammonia decomposition catalyst of the present embodiment can be obtained by reducing the transition metal compound by a usual method.

The method for reducing the transition metal compound (hereinafter, reduction treatment) is not particularly limited as long as the object of the present invention is not impaired. Examples include (I) a method carried out under an atmosphere containing a reducing gas, and (II) a method in which a reducing agent such as NaBH₄, NH₂NH₂, or formalin is added to a solution containing the transition metal compound, thereby depositing the metal on the surface of the metal hydride. A preferable example is a method carried out under an atmosphere containing a reducing gas. Examples of the reducing gas include hydrogen, ammonia, methanol (vapor), ethanol (vapor), methane, and ethane.

During the reduction treatment, components other than the reducing gas that do not inhibit the object of the present invention, in particular the ammonia decomposition reaction, may coexist in the reaction system. Specifically, gases such as argon and nitrogen that do not inhibit the reaction may coexist with a reducing gas such as hydrogen during the reduction treatment. Preferably, nitrogen is allowed to coexist.

When the reduction treatment is carried out in a gas containing hydrogen, the reduction treatment can be carried out in parallel with the ammonia decomposition described later by allowing nitrogen to coexist with hydrogen. That is, when the ammonia decomposition catalyst of the present embodiment is used as the ammonia decomposition catalyst described later, the transition metal compound supported on the metal hydride may be reduced and converted into a transition metal by placing it under the reaction conditions of the ammonia decomposition reaction.

The temperature during the reduction treatment is not particularly limited but is usually 200 °C or more, preferably 300 °C or more, and preferably less than 700 °C. More preferably, the treatment is performed at 400 °C or more and less than 700 °C. By performing the treatment within the above temperature range, growth of the transition metal proceeds sufficiently and within a preferable range.

The pressure during the reduction treatment is not particularly limited but is usually 0.01 MPa or more and 10 MPa or less. When the pressure during the reduction treatment is the same as the ammonia decomposition conditions described later, complicated operations can be avoided, which is advantageous from the standpoint of production efficiency.

The time of the reduction treatment is not particularly limited but is usually 1 hour or more, and preferably 2 hours or more, when carried out at atmospheric pressure. When carried out at a higher reaction pressure (for example, 1 MPa or more), a time of 1 hour or more is preferable.

When a transition metal compound that is not converted into a transition metal by thermal decomposition is used, the ammonia decomposition catalyst of the present embodiment can be obtained by reducing the transition metal compound contained in the solid mixture by a usual method, as in the above-described reduction treatment.

Components other than the titanate or titanium oxynitride and the transition metal may further be included as a support for the oxynitride, such as carbonaceous substances such as activated carbon and inorganic oxides.

The ammonia decomposition catalyst of the present embodiment can be used as a molded body produced by a usual molding technique. Specific examples of shapes include granules, spheres, tablets, rings, macaroni shapes, four-leaf shapes, dice shapes, and honeycomb shapes. The catalyst may also be used after being coated on an appropriate support.

When the ammonia decomposition catalyst of the present embodiment is used, the reaction activity is not particularly limited. For example, taking the hydrogen production rate as an example, at a reaction pressure of 0.1 MPa under irradiation with microwaves at low output (for example, 3 W to 1000 W, preferably 10 W to 50 W), the hydrogen production rate is preferably 300 mmol/g·h or more, more preferably 500 mmol/g·h or more, still more preferably 800 mmol/g·h or more, and most preferably 900 mmol/g·h or more. A hydrogen production rate of 500 mmol/g·h or more is suitable as a practical production condition. A hydrogen production rate of 800 mmol/g·h or more is suitable as a more highly efficient production condition. A hydrogen production rate of 900 mmol/g·h or more is suitable as a further highly efficient production condition.

### EXAMPLES

The present invention will be described in more detail below with reference to Examples. The amount of NH₃ converted was quantified by gas chromatography, and the ammonia decomposition activity was evaluated by determining the ammonia decomposition efficiency (NH₃ conversion (%)).

### (Gas Chromatography (GC) Analysis)

The amount of hydrogen produced in the following Examples and Comparative Examples was determined by gas chromatography (GC) using the absolute calibration curve method. The measurement conditions were as follows.

### [Measurement Conditions]

Measurement apparatus: GC-14A (Shimadzu)
Column: Porapak QS
Column temperature: 80 °C
Carrier gas: He
Gas detector: TCD

### (Production Example 1)

### "Production of BaTiO₃₋ₓH_{z}"

Commercial TiO₂ powder (manufactured by Aldrich, 99.5%) and BaH₂ powder were mixed in a glovebox at a molar ratio of 1:1. The obtained mixture was then charged into a fused silica tube, and calcination was carried out at 800 °C for 20 hours in an electric furnace while flowing hydrogen gas at 10 mL min⁻¹ through the fused silica tube. In this manner, a BaTiO_{2.01}H_{0.96} powder in which some of the oxide ions had been substituted with hydride ions was synthesized. Thereafter, washing with water was carried out to remove impurities and the like.

### (Production Example 2)

### [Production of BaTiO₃₋ₓN_{y} Powder]

The BaTiO₃₋ₓH_{z} powder obtained in Production Example 1 was heated to 600 °C over 1 hour and then subjected to heat treatment at 600 °C for 12 hours in a nitrogen gas flow at a flow rate of 10 mL/min (pressure: 0.1 MPa), thereby obtaining BaTiO₃₋ₓN_{y} powder.

### (Production Example 3)

### [Synthesis of BaTiO₃₋ₓ Powder Having Hexagonal Crystal Structure]

The BaTiO₃₋ₓH_{z} powder obtained in Production Example 1 was subjected to heat treatment at 800 °C for 12 hours in air, thereby obtaining BaTiO₃₋ₓ (h-BaTiO₃₋ₓ) powder.

### (Example 1)

### [Loading Ni on BaTiO₃₋ₓN_{y}]

Powder-form BaTiO₃₋ₓN_{y} (0.50 g) produced in Production Example 2 and Ni(C₅H₅)₂ (manufactured by Tokyo Chemical Industry Co., Ltd., 98%; 0.08 g, corresponding to 5 % by mass of supported Ni metal relative to BaTiO₃₋ₓN_{y}) were placed into a fused silica reaction tube. Hydrogen was flowed at 2.5 mL/min through the fused silica reaction tube, and the temperature was raised to 250 °C over 0.5 hours and then maintained for a further 1.5 hours, thereby obtaining a supported material in which Ni was fixed to BaTiO₃₋ₓN_{y} (hereinafter referred to as Ni/ BaTiO₃₋ₓN_{y}).

Using the ammonia decomposition catalyst obtained in this manner, the following ammonia decomposition reaction was carried out.

### [Ammonia Decomposition Using Ni-Supported BaTiO₃₋ₓN_{y}]

### <Ammonia Decomposition Reaction>

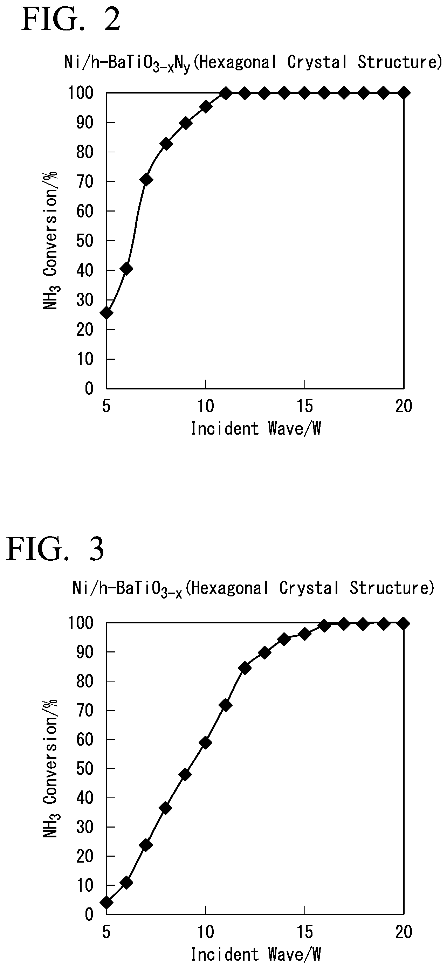

Using 5% by mass Ni/BaTiO₃₋ₓN_{y} prepared in Example 1 as an ammonia decomposition catalyst, a reaction was carried out to produce nitrogen and hydrogen by decomposing ammonia. The reaction was carried out in a fixed-bed flow reactor (see Fig. 1 ) equipped with a microwave irradiation device (specifically, a microwave reactor MR-2G-100 manufactured by Ryowa Electronics Co., Ltd.) equipped with a glass tube packed with 0.1 g of the Ni-supported material as an ammonia decomposition catalyst. Prior to the reaction, the catalyst was pretreated by flowing ammonia at 25 mL/min, irradiating with microwaves (power output 50 W) for 2 minutes, and maintaining the conditions for 2 minutes. In the ammonia decomposition reaction, the flow rate of ammonia gas was set to 25 mL/min (NH₃) (Weight Hourly Space Velocity (WHSV) 15,000 mL g⁻¹ h⁻¹), and the reaction pressure was 0.1 MPa. The gas exiting the fixed-bed flow reactor was quantified by gas chromatography. The ammonia decomposition efficiency (NH₃ conversion) was measured by maintaining each output at 5 W to 20 W for 20 minutes. The results are shown in Table 1 and Figure 2.

### (Example 2)

### [Loading Ni on h-BaTiO₃₋ₓ Powder]

Except that h-BaTiO₃₋ₓ powder produced in Production Example 3 was used instead of BaTiO₃₋ₓN_{y} in Example 1, a supported material in which Ni was fixed to h-BaTiO₃₋ₓ (hereinafter referred to as 5 % by mass Ni/h-BaTiO₃₋ₓ) was obtained in the same manner as in Example 1.

Using the ammonia decomposition catalyst obtained in this manner, the following ammonia decomposition reaction was carried out.

### <Ammonia Decomposition Reaction>

Using 5 % by mass Ni/h-BaTiO₃₋ₓ obtained above instead of 5 % by mass Ni/BaTiO₃₋ₓN_{y} in Example 1 as an ammonia decomposition catalyst, the ammonia decomposition reaction was carried out under the same conditions as in Example 1. The results are shown in Table 1 and Fig. 3.

### (Example 3)

### [Ammonia Decomposition Reaction Using h-BaTiO₃₋ₓN_{y}]

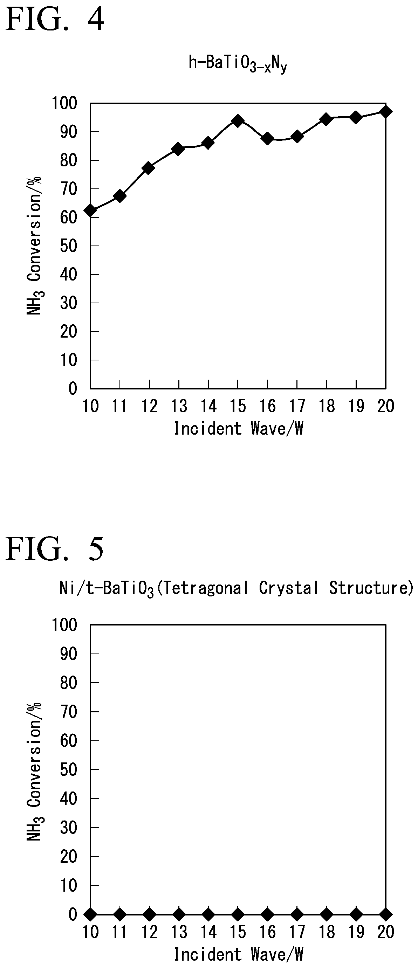

Using h-BaTiO₃₋ₓN_{y} powder produced in Production Example 2 instead of 5 % by mass Ni/BaTiO₃₋ₓN_{y} in Example 1 as an ammonia decomposition catalyst, the ammonia decomposition reaction was carried out under the same conditions as in Example 1. The results are shown in Table 1 and Fig. 4.

### (Comparative Example 1)

### [Loading Ni on BaTiO₃ Powder Having Tetragonal Crystal Structure]

Except that BaTiO₃ having a tetragonal crystal structure (manufactured by Aldrich; hereinafter t-BaTiO₃) was used instead of BaTiO₃₋ₓN_{y} in Example 1, a supported material in which Ni was fixed to t-BaTiO₃ (hereinafter Ni/t-BaTiO₃) was obtained in the same manner as in Example 1.

Using the ammonia decomposition catalyst obtained in this manner, the following ammonia decomposition reaction was carried out.

Using 5 % by mass Ni/t-BaTiO₃ obtained above instead of 5 % by mass BaTiO₃₋ₓN_{y} in Example 1 as an ammonia decomposition catalyst, the ammonia decomposition reaction was carried out under the same conditions as in Example 1. The results are shown in Table 1 and Fig. 5.

### (Comparative Example 2)

### [Loading Ni on La₂O₃ Powder]

A supported material in which Ni was fixed to La₂O₃ (manufactured by Wako Pure Chemical Industries, Ltd.; hereinafter Ni/La₂O₃) was obtained instead of BaTiO₃₋ₓN_{y} in Example 1.

### [Ammonia Decomposition Using Ni/La₂O₃]

### <Ammonia Decomposition Reaction>

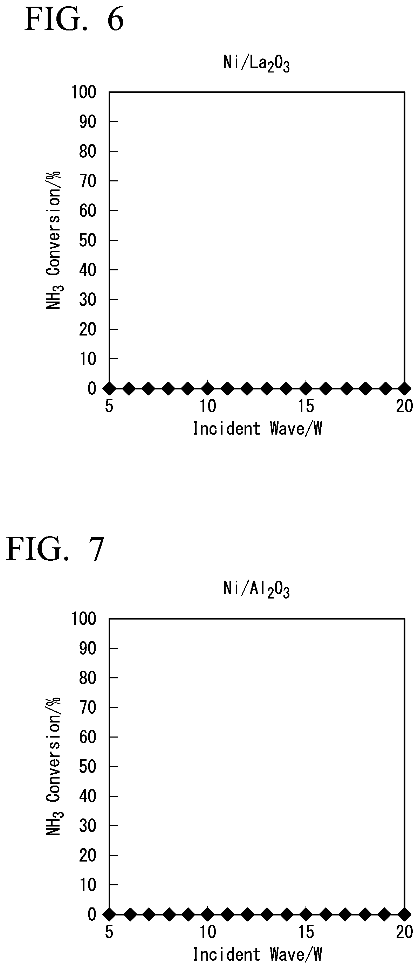

Using 5 % by mass Ni/ La₂O₃ obtained above as an ammonia decomposition catalyst instead of 5 % by mass BaTiO₃₋ₓN_{y} in Example 1, an ammonia decomposition reaction was carried out under the same conditions as in Example 1. The results are shown in Figure 6.

### (Comparative Example 3)

### [Loading Ni on Al₂O₃ Powder]

A supported material in which Ni was fixed to Al₂O₃ (manufactured by Aldrich; hereinafter Ni/Al₂O₃) was obtained instead of Ni/BaTiO₃₋ₓN_{y} in Example 1.

### [Ammonia Decomposition Using Ni/ Al₂O₃]

### <Ammonia Decomposition Reaction>

Using 5 % by mass Ni/ Al₂O₃ obtained above as an ammonia decomposition catalyst instead of 5 % by mass BaTiO₃₋ₓN_{y} in Example 1, an ammonia decomposition reaction was carried out under the same conditions as in Example 1. The results are shown in Figure 7.

### (Comparative Example 4)

### [Loading Ni on TiN Powder]

A supported material in which Ni was fixed to TiN (manufactured by Kojundo Chemical Laboratory Co., Ltd.; hereinafter Ni/TiN) was obtained instead of BaTiO₃₋ₓN_{y} in Example 1.

### [Ammonia Decomposition Using Ni/TiN]

### <Ammonia Decomposition Reaction>

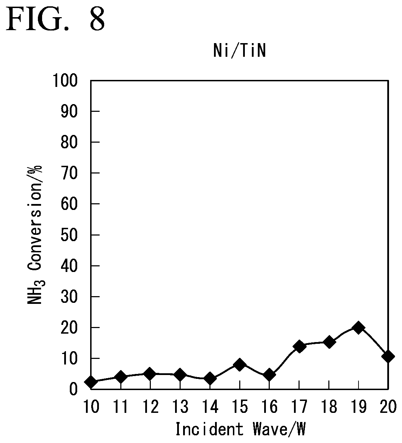

Using 5 % by mass Ni/TiN obtained above as an ammonia decomposition catalyst instead of 5 % by mass BaTiO₃₋ₓN_{y} in Example 1, an ammonia decomposition reaction was carried out under the same conditions as in Example 1. The results are shown in Figure 8.

### (Comparative Example 5)

Using 5 % by mass Ni/h-BaTiO₃₋ₓ of Example 2 as an ammonia decomposition catalyst, the ammonia decomposition reaction was carried out by performing heat treatment using an electric furnace instead of microwave irradiation. The results are shown in Table 1.

Specifically, the ammonia decomposition reaction was carried out in a fixed-bed flow-type reaction apparatus provided with a glass tube packed with 0.1 g of the above titanate as an ammonia decomposition catalyst. Before the reaction, pretreatment of the catalyst was carried out by flowing nitrogen at 5 mL/min and hydrogen at 15 mL/min and maintaining for 1 hour. In the ammonia decomposition reaction, the flow rate of the ammonia gas was set to NH₃: 25 mL/min (WHSV 15000 mL g⁻¹h⁻¹), and the reaction was carried out at a reaction pressure of 0.1 MPa. The gas exiting from the fixed-bed flow-type reaction apparatus was quantified by gas chromatography. The ammonia decomposition efficiency (NH₃ conversion) was measured by maintaining the power consumption for heating at 30 W and 60 W for 1 hour each.

### (Comparative Example 6)

Using h-BaTiO₃₋ₓN_{y} of Example 3 as an ammonia decomposition catalyst, the ammonia decomposition reaction was carried out by performing heat treatment using an electric furnace instead of microwave irradiation. The results are shown in Table 1.

Specifically, the ammonia decomposition reaction was carried out under the same conditions as in Comparative Example 5 except that the titanium oxynitride described above was used as the ammonia decomposition catalyst instead of the titanate described in Comparative Example 5.

**[Table 1]**

| | Catalyst | Ammonia Decomposition Efficiency* | Notes |
|---|---|---|---|
| Example 1 | 5% by mass Ni/BaTiO₃₋ₓN_{y} | >99% | Microwave Irradiation |
| Example 2 | 5% by mass Ni/h-BaTiO₃₋ₓ | 72% | Microwave Irradiation |
| Example 3 | BaTiO₃₋ₓN_{y} | 60% | Microwave Irradiation |
| Comparativ e Example 1 | 5% by mass Ni/t-BaTiO₃ | 0% | Microwave Irradiation |
| Comparativ e Example 2 | 5% by mass Ni/La₂O₃ | 0% | Microwave Irradiation |
| Comparativ e Example 3 | 5% by mass Ni/Al₂O₃ | 0% | Microwave Irradiation |
| Comparativ e Example 4 | 5% by mass Ni/TiN | 2% | Microwave Irradiation |
| Comparativ e Example 5 | 5% by mass Ni/h-BaTiO₃₋ₓ | 30% | Electric Furnace Heating (1) |
| | | ≦2% | Electric Furnace Heating (2) |
| Comparativ e Example 6 | h-BaTiO₃₋ₓN_{y} | ≦2% | Electric Furnace Heating (1) |
| | | ≦2% | Electric Furnace Heating (2) |

Reaction conditions in microwave irradiation test region:
Microwave output: 11 W
Pressure: 0.1 MPa
WHSV: 15000 mL g⁻¹h⁻¹
Reaction conditions in electric-furnace heating test region "Electric heating (1)": Power consumption for heating: 60 W
Pressure: 0.1 MPa
WHSV: 15000 mL g⁻¹h⁻¹
Reaction conditions in electric-furnace heating test region "Electric heating (2)": Power consumption for heating: 30 W
Pressure: 0.1 MPa
WHSV: 15000 mL g⁻¹h⁻¹

### (Discussion)

For the 5 % by mass Ni/h-BaTiO₃₋ₓN_{y} catalyst, the 5 % by mass Ni/h-BaTiO₃₋ₓ catalyst, and the BaTiO₃₋ₓN_{y} catalyst, it was found that extremely high ammonia decomposition activity is exhibited even at a microwave output of 11 W. In order to obtain equivalent ammonia decomposition activity by an electric-furnace heating method, it could not be achieved at a power of 11 W, and even when a power of about 30 W or 60 W was applied, sufficient activity was not obtained. In addition, under microwave irradiation, high ammonia conversion was obtained even with h-BaTiO₃₋ₓN_{y} that did not have Ni supported thereon. By contrast, in the case of the 5 % by mass Ni/t-BaTiO₃ catalyst and the catalysts shown in Comparative Examples 2 to 4, ammonia decomposition activity was not observed at a microwave output of 11 W. That is, it is not the case that ammonia decomposition proceeds in a highly efficient manner with low power consumption for any catalyst simply by microwave irradiation. As shown in the present invention, it is important to select and use appropriate catalyst materials that readily cause ammonia decomposition under microwave irradiation.

As is apparent from the results in Tables 1 and 2, it was found that by bringing hexagonal barium titanate (h-BaTiO₃₋ₓN_{y}) or hexagonal barium titanium oxynitride (h-BaTiO₃-xNy) of the present embodiment into contact with ammonia under irradiation with microwaves at low output, ammonia can be decomposed with low power consumption to produce hydrogen. It was also found that by bringing, under irradiation with microwaves at low output, ammonia into contact with a metal-supported material in which a transition metal is supported on barium titanate or barium titanium oxynitride used as a support, ammonia can be decomposed with low power consumption to produce hydrogen.

### REFERENCE SIGNS LIST

20: Microwave resonator
30: Reaction tube
40: Ammonia decomposition catalyst
100: Ammonia decomposition reaction apparatus provided with a microwave irradiation device
MW: Microwaves

## Claims

1. A method for producing hydrogen comprising a step of bringing an ammonia decomposition catalyst comprising a titanate represented by the following general formula (1) or a titanium oxynitride represented by the following general formula (2) into contact with ammonia under irradiation with microwaves at low output,
ATiO₃₋ₓ (1)
wherein, in the general formula (1), A represents at least one element selected from the group consisting of Ba and Sr, and x is a value represented by 0.1 ≤ x ≤ 2.0; and
ATiO₃₋ₓN_{y} (2)
wherein, in the general formula (2), A represents at least one element selected from the group consisting of Ba and Sr, x is a value represented by 0.1 ≤ x ≤ 2.0, and y is a value represented by 0.1 ≤ y ≤ 1.0.

2. The method for producing hydrogen according to claim 1, wherein an output of the irradiation with microwaves at low output is in a range of 3 W or more and 1000 W or less.

3. The method for producing hydrogen according to claim 2, wherein an output of the irradiation with microwaves at low output is in a range of 10 W or more and 50 W or less.

4. The method for producing hydrogen according to claim 1 or 2, wherein the step of bringing the ammonia decomposition catalyst into contact with the ammonia is a step of causing catalytic cracking by continuously supplying an ammonia gas having a volume fraction in a range of 0.1% or more and 100% or less to a catalyst layer comprising the ammonia decomposition catalyst, at a reaction pressure of 0.01 MPa or more and 1.0 MPa or less and under irradiation with microwaves at low output, at a weight hourly space velocity (WHSV) of 15000 mL g⁻¹h⁻¹ or more.

5. The method for producing hydrogen according to claim 1 or 2, wherein the titanate represented by the general formula (1) or the titanium oxynitride represented by the general formula (2) has a hexagonal crystal structure.

6. The method for producing hydrogen according to claim 1 or 2, wherein, in the general formulas (1) and (2), A is Ba.

7. The method for producing hydrogen according to claim 1 or 2, wherein the ammonia decomposition catalyst comprises a metal-supported material in which a transition metal is supported on a support, and the support is the titanate represented by the general formula (1) or the titanium oxynitride represented by the general formula (2).

8. The method for producing hydrogen according to claim 7, wherein the transition metal is at least one selected from the group consisting of Ru, Ni, Fe, and Co.

9. The method for producing hydrogen according to claim 1 or 2, further comprising a step of collecting hydrogen produced in the step of bringing the ammonia into contact.
